# EUROPÄISCHE PATENTANMELDUNG

(11) **EP 1 322 083 A1**
(43) Veröffentlichungstag der Anmeldung: **25.06.2003**
(21) Anmeldenummer: 01250450.2
(22) Anmeldetag: 21.12.2001
(51) Int. Cl.: H04L 29/06

(54) **Vorrichtung und Verfahren zur Steuerung einer Kommunikation über ein Telekommunikationsnetz**

(71) Anmelder: SIEMENS AKTIENGESELLSCHAFT, 80333 München (DE)
(72) Erfinder: Kissner, Martin, Dipl.-Math., 16766 Kremmen (DE)

(57) **Zusammenfassung**

Die Erfindung betrifft ein Verfahren zur Steuerung einer Kommunikation, insbesondere zur Steuerung des Zugriffs von Serviceanbietern (3) auf Nutzerdaten, über ein Telekommunikationsnetz, wobei eine offene Schnittstelle (1) zum Ermöglichen einer freien Kommunikation und die XML-Metasprache als Basistechnologie für die Schnittstelle (1) eingesetzt wird, sowie eine Vorrichtung zur Durchführung des Verfahrens.

## Beschreibung

Die Erfindung betrifft eine Vorrichtung sowie ein Verfahren zur Steuerung einer Kommunikation, insbesondere zur Steuerung des Zugriffs von Serviceanbietern auf Nutzerdaten, über ein Telekommunikationsnetz.

Durch die globale Deregulierung des Telekommunikationsmarktes und aufgrund der zunehmenden Verknüpfung unterschiedlicher Netze untereinander, wird einer immer schneller wachsenden Zahl neuer Serviceanbieter der Zugang an das öffentliche Telekommunikationsnetz gewährleistet. Diese Entwicklung hängt direkt mit der stetig zunehmenden Nachfrage nach Multimedia-Diensten, insbesondere nach solchen aus den Kategorien Kommunikation, Information und E-Business, zusammen.

Wichtige Voraussetzungen für das Anbieten von Multimedia-Diensten ist zum einen eine solide Netzarchitektur und zum anderen eine offene Schnittstelle zwischen dem Netzbetreiber und der Welt der Serviceanbieter.

Eine solide Netzarchitektur zur Unterstützung von Multimedia-Diensten ist üblicherweise in Datenebene, Dienstebene, Steuerungsebene und Transportebene, sowie in eine zusätzliche Verwaltungsebene gegliedert. Dabei speichert die Datenebene sämtliche Informationen im Zusammenhang mit der Anmeldung von Teilnehmern, während die Dienstebene die zentrale Organisation der mit einem Teilnehmer verbundenen Dienste übernimmt. Die Steuerungsebene ist für die Abwicklung der Sitzung entsprechend dem Dienst und dem Zustand verantwortlich, wobei die Transportebene nicht speziell Multimedia-Anwendungen vorbehalten ist und im wesentlichen die physikalische Endstelle der Signalübertragung darstellt. Die einzelnen Ebenen sind dabei über Schnittstellen miteinander verbunden, wobei einige eine Grenze zwischen zwei Betreiber-Sektoren darstellen können. Die Schnittstelle zwischen der Dienstebene und der Steuerungsebene würde typischerweise zwischen einem Netzbetreiber und einem Serviceanbieter verwendet werden. Ein wichtiges Merkmal einer Multimedia-Architektur besteht darin, zu gewährleisten, dass die Dienste offen und in der Lage sind, eine Differentierung zwischen Netzbetreibern und Serviceanbietern zu ermöglichen. Eine Multimedia-Sitzung entwickelt sich in zunehmendem Maße zu einem permanenten und sich verändernden Gefüge von Beziehungen zwischen einem Teilnehmer und Servern bzw. anderen Anwendern. In Zukunft muss die Netzarchitektur für Multimedia-Dienste ein immer weiteres Spektrum an Diensten unterstützen und es ferner dem Netzbetreiber gestatten, sein Angebot zu differenzieren. Dabei ist es notwendig, dass die Kluft zwischen Transport und Steuerung durch das Angebot einer Dienstschicht basierend auf der Steuerungsschicht erweitert werden, wobei beide Schichten durch ein offenes Interface miteinander verbunden werden.

Eine offene Schnittstelle zwischen einem Telekommunikationsnetz und der Welt der Serviceanbieter ist beispielsweise durch das Parlay Interface spezifiziert, welches eine Form der OpenServiceArchitecture (OSA) darstellt. Das anfängliche Ziel der Spezifikationen bestand dabei darin, ein einfaches Interface als Verbindungsgateway zwischen Telekommunikationsnetzen und dem Internet zu entwickeln, um den Netzbetreibern die Möglichkeit zu geben, unabhängig von der unterliegenden Transporttechnologie neue Dienste anzubieten. Das Parlay Interface ist in der Universal Markup Language (UML) spezifiziert und unterstützt die Middleware-Technologien DCOM, CORBA und JAVA. OSA ist eine durch CCITT standardisierte Schnittstelle, die beispielsweise zwischen einem Netzbetreiber und einem Serviceanbieter bilateral eingesetzt werden kann. Dabei ist typischerweise der Netzbetreiber der Informationsanbieter und der Serviceanbieter der Informationsnutzer. OSA definiert CORBA-Interfaces, die den Zugriff auf Daten und Funktionen erlauben, die im Telekommunikationsnetz des Netzbetreibers vorhanden sind. Dadurch kann ein beliebiger Serviceanbieter diese Daten und Funktionen verwenden, sofern ihm der Netzbetreiber den Zugriff erlaubt. OSA wird verwendet, um eine sichere Datenverbindung zwischen dem Serviceanbieter und dem Netzbetreiber zu etablieren. OSA enthält eine Reihe verschiedener Interfaces, die bestimmten Services zugeordnet sind. Die Services können einzeln für den Informationsnutzer (Serviceanbieter) freigegeben werden, jedoch nicht je MSISDB (mobile station ISDN identification), d.h. also nicht je Teilnehmer.

Nur eine offene Schnittstelle kann die Anforderungen eines auf einem Multimedia-Dienst basierenden Geschäftsmodells erfüllen, da der Serviceanbieter einen Zugriff auf Netzdaten eines Teilnehmers benötigt. Das Parlay Interface erlaubt hierfür den Zugriff auf Netzdaten über ein Peer-to-peer Interface, das ein Service Level Agreement (SLA), also eine bilaterale Absprache zur Nutzung des Interfaces, und einen entsprechenden technischen Parameteraustausch erfordert.

Problematisch bei der zur Zeit gängigen Vorgehensweise ist es, dass derzeit kein Konzept und daher kein standardisiertes Interface vorliegt, welches es dem Serviceanbieter ermöglicht, Nutzerdaten aus einem Endgerät selbst abzufragen. Bisher kann nur der Netzbetreiber eine entsprechende Anfrage beantworten. Der Zugriff auf Nutzerdaten kann somit nur pauschal erlaubt oder verhindert werden. Die Verwaltung der Daten, sowie die im Hinblick auf den Datenschutzes zu tragende Verantwortung liegt dabei beim Netzbetreiber. Ferner sind durch die für den Zugriff auf Nutzerdaten erforderliche bilaterale Absprache und durch den technischen Parameteraustausch bei n Serviceanbietern und m Nutzern (n·m) Interfaces notwendig, wodurch die Handhabung in der Praxis recht komplex wird.

Aufgrund der geschilderten Problemstellung liegt der vorliegenden Erfindung die Aufgabe zugrunde, ein offenes Interface zwischen Serviceanbietern und Netzbetreibern an die Erfordernisse der gängigen Geschäftsmodelle anzupassen. Ferner soll in der erfinderischen Lösung eine Einschränkung des Zugriffs auf Nutzerdaten mit berücksichtigt werden.

Dieses technische Problem wird durch eine Vorrichtung nach Patentanspruch 1 und ein Verfahren nach Patentanspruch 4 gelöst.

Ein wesentlicher Punkt der Erfindung liegt darin, dass eine Vorrichtung zur Steuerung einer Kommunikation über ein Telekommunikationsnetz mit einer offenen Schnittstelle zum Ermöglichen einer freien Kommunikation eingesetzt wird, wobei für die Schnittstelle die XML-Metasprache als Basistechnologie eingesetzt wird.

Der Vorteil der Erfindung liegt zunächst darin, dass sich mittels XML alle derzeit in OSA definierten CORBA-Funktionen abdecken lassen, so dass generell eine Standardisierung möglich ist, was auf dem Gebiet der Multimedia-Dienstleistung ein angestrebtes Ziel ist. Ferner ist besonders vorteilhaft, dass durch die Verwendung der XML Technologie einem Serviceanbieter als Informationsnutzer es erlaubt ist, auf ein Interface eines Netzbetreibers als Informationsanbieter zuzugreifen, ohne dass hierfür eine spezielle Software benötigt wird. Insbesondere entfällt eine Installation einer spezifischen CORBA-Release und einer abgestimmten OSA-Release. Dies ermöglicht eine schnelle Markteinführung der erfindungsgemäßen Lösung und Vorteile bei der Standardisierung offener Schnittstellen in Telekommunikationsnetzen.

In einer vorteilhaften Ausführungsform ist die Schnittstelle in einem öffentlichen Telekommunikationsnetz implementiert, wobei http als Transportprotokoll verwendet wird. Dadurch kann der Zugriff auf das XML-OSA-Interface über ein öffentliches Telekommunikationsnetz erfolgen, und die vom Netzbetreiber angebotenen Funktionen sind auch jedem Internetnutzer zugänglich. Im Hinblick auf die steigende Zahl neuer Serviceanbieter ist dies besonders vorteilhaft. Die Lösung erlaubt es somit auch Kommunikationspartnern, die bisher keine Geschäftsbeziehung hatten, Daten auszutauschen.

In einer vorteilhaften Ausführungsform erfolgt für einen Serviceanbieter eine Zugriffsfreigabe und -sperrung von Nutzerdaten durch den jeweils zugehörigen Teilnehmer. Der Vorteil dieses teilnehmergesteuerten Zugriffsverfahrens liegt insbesondere darin, dass nicht mehr der Netzbetreiber entscheidet, welche Nutzerdaten für die Verwendung durch bestimmte Serviceanbieter freigegeben werden, sondern nur der Teilnehmer über den Zugriff auf seine Daten von ausgesuchten Serviceanbietern entscheidet. Dadurch wird erreicht, dass der Teilnehmer seine eigenen Daten selber kontrolliert. Von Vorteil ist dabei insbesondere, dass zum einen die Verantwortung des Netzbetreibers im Hinblick auf den Datenschutz und zum anderen der von dem Netzbetreiber aufzubringende Wartungsaufwand deutlich reduziert werden.

Im Hinblick auf eine praktische Realisierung des teilnehmergesteuerten Zugriffs auf Nutzerdaten sieht die erfindungsgemäße Lösung ein Verfahren vor, bei dem zunächst der Teilnehmer für eine spezifische Funktion ein nur ihm bekanntes Token (T) generiert und dieses dann der Funktion zuteilt. Wenn der Teilnehmer eine Funktion für einen bestimmten Serviceanbieter freigeben will, gibt er diesem das Token in dieser Funktion. Der Serviceanbieter kann dann unter Verwendung des Tokens die Funktion nutzen. Das Token dient dabei zur Freigabe der Funktion für einen bestimmten Serviceanbieter. Solange der Teilnehmer kein Token generiert hat, ist die Funktion gesperrt, was einem voreingestellten Standardwert entspricht.

Will der Teilnehmer die Nutzung einer Funktion nach einer früheren Freigabe wieder einschränken, ist in der erfindungsgemäßen Lösung vorgesehen, dass der Teilnehmer ein weiteres Token generiert, welches er dann an die betreffenden Serviceanbieter neu verteilt. Dieses ist insbesondere dann von Vorteil, wenn nur ein zeitweiliger Zugriff auf Funktionen gewünscht wird.

Damit durch den Teilnehmer anfangs nicht eine Vielzahl von Tokens generiert werden muss, erhält der Teilnehmer in einer vorteilhaften Weiterbildung der Erfindung die Möglichkeit, ein Token für eine spezielle Funktion selbst neu zu generieren. Nur der Teilnehmer kann diese Funktion ausführen.

In einer vorteilhaften Weiterbildung der erfindungsgemäßen Lösung ist vorgesehen, dass das Token mittels eines asymmetrischen Kodierverfahrens mit der Adresse des Serviceanbieters kodiert ist. Dadurch wird erreicht, dass ein Serviceanbieter ein Token an einen weiteren Serviceanbieter abgeben kann.

Durch die erfindungsgemäße Lösung hat der Teilnehmer somit die volle Kontrolle über die Zugänglichkeit seiner Daten, ferner erlaubt das Verfahren eine sichere Kommunikation der Nutzerdaten über öffentliche Netze.

Für eine offene Schnittstelle gilt, dass es im Prinzip jedem Kontaktaufnahmewilligen z. B. über eine Internet-Verbindung möglich ist, die Schnittstelle zu nutzen. Das Abrufen von Daten oder die Nutzung von speziellen Funktionen über die Schnittstelle ist jedoch nur demjenigen möglich, der einen "Schlüssel" (z. B. Token) vorweisen kann. Bei einem derartigen Token kann es sich z. B. um eine Folge von Zeichen handeln.

Vorteile und Zweckmäßigkeiten der Erfindung werden im übrigen aus den Unteransprüchen sowie der Beschreibung einer bevorzugten Ausführungsform anhand der Figuren deutlich. Von diesen zeigen:
Fig. 1 eine Default Einstellung einer Schnittstelle bei einem Netzbetreiber für einen Teilnehmer;
Fig. 2 das Generieren und Zuteilen eines Tokens für eine bestimmte Funktion durch den Teilnehmer;
Fig. 3 das Verwenden des Tokens durch einen Serviceanbieter, um Zugang zu der Funktion zu erlangen;
Fig. 4 das Erlangen des Zuganges von einem Serviceanbieter unter Verwendung eines codierten Tokens; und
Fig. 5 eine Public-Funktion Einstellung der Schnittstelle.

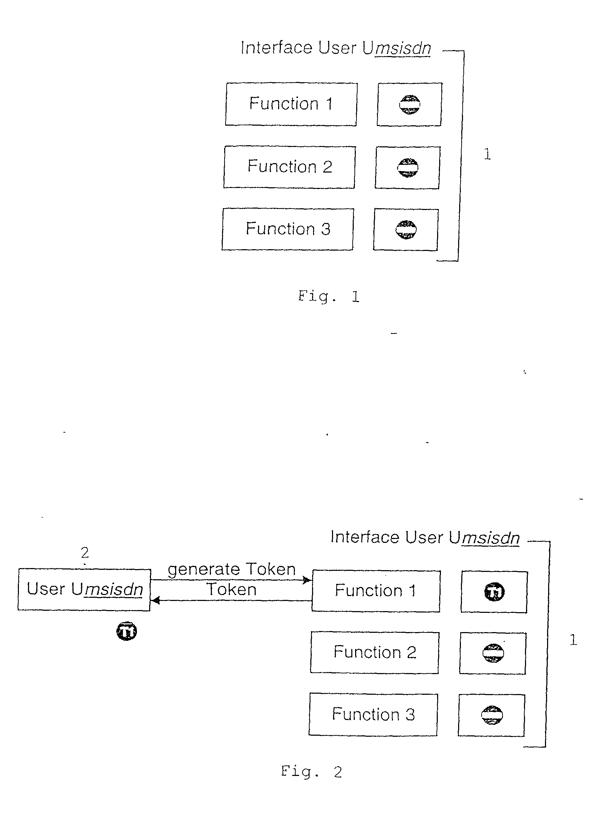

Fig. 1 stellt eine Default-Einstellung einer Schnittstelle 1 für einen Teilnehmer 2 dar. In dieser Einstellung ist es einem Serviceanbieter 3 nicht möglich, Netzdaten des Teilnehmers 2 abzurufen und Funktionen bezüglich der Netzdaten des Teilnehmers 2 auszuführen. Netzdaten eines Teilnehmers 2 sind alle Daten, die ein Netzbetreiber im Netz speichert, wie beispielsweise Presence (Mobilfunkgerät eingeschaltet), Location, Identität oder Kontostand. Funktionen, die bezüglich der Netzdaten ausgeführt werden können sind z.B. Abbuchung oder Alarmierung.

Mit der erfinderischen Lösung soll erreicht werden, dass ein Teilnehmer 2 Teile seiner Daten und spezifische Funktionen nur an bestimmte Serviceanbieter 3 freigeben kann. Zu diesem Zweck wird jede Funktion mit einem eigenen Token T gekennzeichnet, das nur dem Teilnehmer 2 bekannt ist. Solange er kein Token T generiert hat, hat die Funktion den voreingestellten Standardwert "gesperrt".

Fig. 2 stellt ein Generieren eines Tokens T (hier: Token T1) durch den Teilnehmer 2 dar. Nachdem der Teilnehmer 2 (hier: Teilnehmer U) ein Token T1 generiert hat, kann er es dazu verwenden, einem Serviceanbieter 3 Zugriff auf diese spezifische Funktion (hier: Funktion 1) zu gewähren.

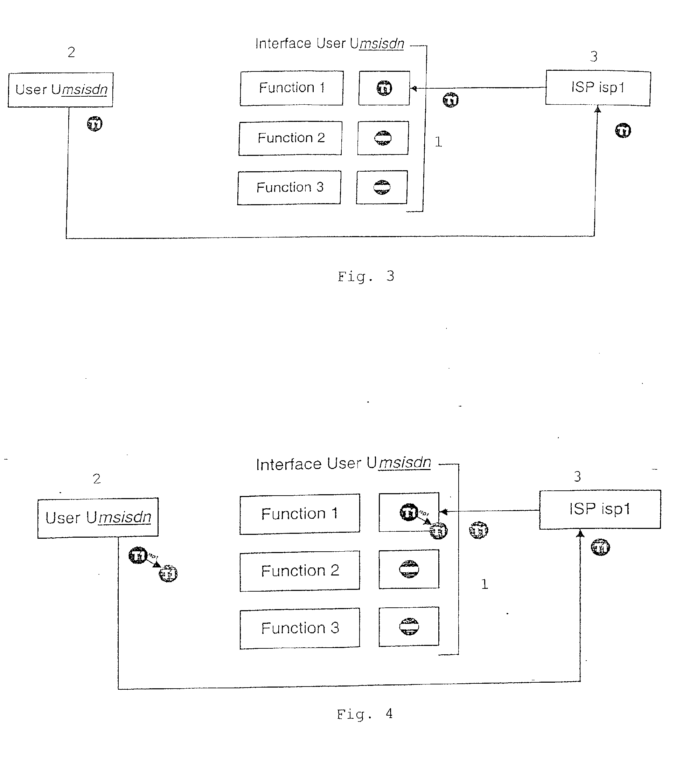

In Fig. 3 ist ein Verwenden des Tokens T1 durch einen Serviceanbieter 3 gezeigt, um Zugang zu einer speziellen Funktion (Funktion 1) zu erlangen. Wenn der Teilnehmer 2 die spezielle Funktion (hier: Funktion 1) für einen bestimmten Serviceanbieter 3 freigeben will, gibt er diesem das Token T1 dieser Funktion. Der Serviceanbieter 3 kann dann unter Verwendung des Tokens T1 die spezielle Funktion (Funktion 1) nutzen.

Will der Teilnehmer 2 die Nutzung einer Funktion wieder einschränken, kann er ein neues Token generieren und muss dieses dann an alle erwünschten Serviceanbieter 3 neu verteilen. Das kann insbesondere angewendet werden, um einen zeitweiligen Zugriff auf Funktionen zu gewähren.

In Fig. 4 ist das Erlangen eines Zuganges des Serviceanbieters 3 (hier: ISP 1) unter Verwendung eines codierten Tokens gezeigt. Um zu verhindern, dass ein Token T1 an einen dritten Serviceanbieter weitergegeben werden kann, wird das Token T1 mittels eines asymmetrischen Codierverfahrens mit der Adresse des Serviceanbieters (hier: ISP 1) codiert. Der Serviceanbieter 3 (hier: ISP 1) erhält so die Möglichkeit, die Richtigkeit des Tokens T1 zu prüfen, ohne dass das Token T1 selbst an Serviceanbieter 3 weitergegeben wird.

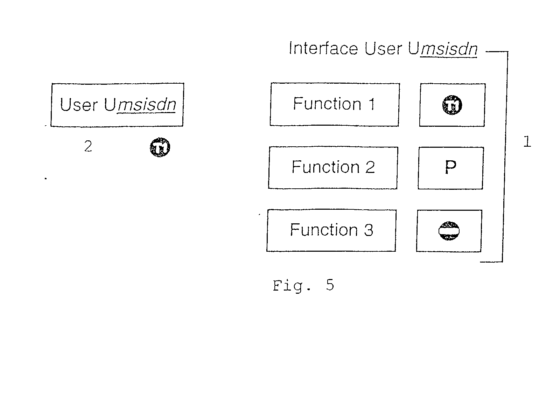

Fig. 5 zeigt eine Public-Function-Einstellung der Schnittstelle. Um Funktionen allen Anwendern 3 zu öffnen, kann ein "public"- Token P verwendet werden. Dieses kann beispielsweise als Default-Einstellung verwendet werden, um die Location eines Teilnehmers 2 an alle Serviceanbieter 3, und damit aber auch allen anderen Internet-Teilnehmern, generell freizugeben.

Die Ausführung der Erfindung ist nicht auf die beschriebenen Ausführungsbeispiele beschränkt, sondern auch in einer Vielzahl von Varianten möglich.

## Patentansprüche

1. Vorrichtung zur Steuerung einer Kommunikation, insbesondere zur Steuerung des Zugriffs von Serviceanbietern (3) auf Nutzerdaten, über ein Telekommunikationsnetz,
**gekennzeichnet durch**
- eine offene Schnittstelle (1) zum Ermöglichen einer freien Kommunikation; und
- den Einsatz der XML-Metasprache als Basistechnologie für die Schnittstelle (1).

2. Vorrichtung nach Anspruch 1,
**dadurch gekennzeichnet, dass**
- die Schnittstelle (1) in einem öffentlichen Telekommunikationsnetz implementiert ist; und
- http als Transportprotokoll verwendet wird.

3. Vorrichtung nach Anspruch 1 oder 2,
**dadurch gekennzeichnet, dass**
für einen Serviceanbieter (3) eine Zugriffsfreigabe und - sperrung von Nutzerdaten durch den jeweils zugehörigen Teilnehmer (2) erfolgt.

4. Verfahren zur Steuerung einer Kommunikation über ein Telekommunikationsnetz, insbesondere zur Steuerung des Zugriffs von Serviceanbietern (3) auf Nutzerdaten, mit einer offenen Schnittstelle (1) und XML als Basistechnologie, mit folgende Schritten:
a) Generierung eines Tokens (T) zur Zugriffssteuerung auf eine spezifische Funktion durch den zugehörigen Teilnehmer (2); und
b) Zuteilung des Tokens (T) der Funktion durch den Teilnehmer (2).

5. Verfahren nach Anspruch 4, mit folgenden weiteren Verfahrensschritten nach Schritt a):
b1) Übergabe des Tokens (T) an einen Serviceanbieter (3) durch den Teilnehmer (2) zur Freigabe der Funktion für den Serviceanbieter (3); und
b2) Nutzung der freigegebenen Funktion durch den Serviceanbieter (3).

6. Verfahren nach Anspruch 4 oder 5,
**dadurch gekennzeichnet, dass**
die Nutzung einer Funktion eingeschränkt wird, indem der Teilnehmer (2) ein neues Token (T) generiert und das Token (T) der Funktion und dem Serviceanbieter (3) zuteilt.

7. Verfahren nach einem der Ansprüche 4 bis 6,
**dadurch gekennzeichnet, dass**
der Teilnehmer ein Token (T) für eine spezielle Funktion selbst neu generiert.

8. Verfahren nach einem der Ansprüche 4 bis 7,
**dadurch gekennzeichnet, dass**
das Token (T) mittels eines asymmetrischen Kodierverfahrens mit der Adresse des Serviceanbieters (3) kodiert ist.
